# EUROPÄISCHE PATENTSCHRIFT

(11) **EP 3 000 292 B1**
(45) Veröffentlichungstag und Bekanntmachung des Hinweises auf die Patenterteilung: **10.05.2017**
(21) Anmeldenummer: 15401092.0
(22) Anmeldetag: 04.09.2015
(51) Int. Cl.: A01B 29/04

(54) **BODENWALZE**
SOIL ROLLER
ROULEAU AGRICOLE

(30) Priorität: 10.09.2014 DE 102014112996
(43) Veröffentlichungstag der Anmeldung: 30.03.2016
(73) Patentinhaber: Amazonen-Werke H. Dreyer GmbH & Co. KG, 49205 Hasbergen (DE)
(72) Erfinder: Fankhauser, Carlos Fernando, 27798 Hude (DE); Reinke, Wilfried, 26123 Oldenburg (DE)

(56) Entgegenhaltungen:
- EP-B1- 0 861 577
- FR-A1- 2 784 331

## Beschreibung

Die Erfindung betrifft eine Bodenwalze gemäß des Oberbegriffes des Patentanspruches 1.

Eine derartige Bodenwalze ist in der EP 0 861 577 B1 beschrieben. Diese Bodenwalze besteht aus beabstandet zueinander angeordneten umlaufenden Bodenverfestigungsringen, zwischen denen umlaufende Abstandselemente angeordnet sind. Die abwechselnd auf dem zentralen Tragrohr angeordneten Bodenverfestigungsringe und Abstandselemente werden mittels geeigneter Spannelemente gegeneinandergedrückt. Weil die Absatzelemente ausschließlich gegen die Bodenverfestigungsringe drücken, ist keine definierte und ausreichend gleichmäßige Verspannung der Bodenverfestigungsringe und der Abstand Elemente zueinander gewährleistet, weil sich das elastische Material der Bodenverfestigungsringe zwischen den Abstandselementen befindet.

Eine weitere bekannte Bodenwalze mit Bodenverdichtungsringen zeigt die FR 2 784 334 A1. In dem Ausführungsbeispiel gemäß den Fig. 6 - 8 sind in den Bodenverdichtungsringen Aussparungen angeordnet, in welche Ansätze von Verbindungsringen eingreifen. Die Aussparungen erstrecken sich nicht über die gesamte Bereite der Bodenverdichtungsringe. Auch auf diese Bodenwalze treffen die in dem zuvor beschriebenen Stand der Technik geschilderten Nachteile zu

Der Erfindung liegt die Aufgabe zu Grunde, eine Vereinfachung der Montage und eine bessere Positionierung der Bodenverfestigungsringe auf dem Tragrohr in einfacher Weise zu erreichen.

Diese Aufgabe der erfindungsgemäß durch die kennzeichnenden Merkmale des Anspruches 1 gelöst.

Infolge dieser Maßnahmen erfolgt eine definierte Verspannung der Bodenverdichtungsringe durch die Abstandselemente auf dem Tragrohr, weil die durch die Aussparungen in den Bodenverdichtungsringen hindurchgehenden und aneinander anliegenden Ansätze der Abstandelemente unmittelbar, ohne die zwischen Lage des elastischen Materiales der Bodenverfestigungsringe, aneinander Anliegen und so gegeneinander verspannt werden. Somit wird ein Formschluss durch das unmittelbare aneinander Anliegen der Ansätze der Abstandelemente erzwungen. Auch der Abstand der Bodenverdichtungsringe zueinander wird hierdurch in der vorgeschriebenen Weise gewährleistet. Hierdurch wird eine definierte Anordnung der Bodenverdichtungsringe zueinander und eine gleichmäßige Verspannung dieser Elemente erreicht.

Um möglichst viele gleiche Teile zu erhalten, ist vorgesehen, dass die Ansätze an den Abstandselementen die halbe Breite des Abstandes der Abstandselemente im montierten Endzustand der Abstandselemente und der Bodenverfestigungsringe auf dem Tragrohr der Bodenwalze aufweisen. Somit brauchen nur sehr wenige verschiedene Teile vorgehalten zu werden.

Eine einfache Ausgestaltung der Bodenverdichtungsringe und der Abstandselemente wird dadurch erreicht, dass die Bodenverdichtungsringe aus Kunststoff oder Gummi bestehenden, dass die Abstandselemente aus einem steiferen Material als die Bodenverdichtungsringe bestehen.

Eine vorteilhafte Ausgestaltung und Selbstreinigung der Bodenverdichtungsringe ergibt sich dadurch, dass die Bodenverdichtungsringe einen umlaufenden Hohlraum aufweisen.

Um eine noch weitere verbesserte verschiebesichere Anordnung der Bodenverdichtungsringe auf dem Tragrohr zu erreichen, ist vorgesehen, dass die Bodenverdichtungsringe in dem dem Tragrohr benachbarten Bereich derart ausgestaltet sind, dass das Material der Bodenverdichtungsringe durch das Zusammenpressen der Abstandselemente und der Bodenverdichtungsringe in axialer Richtung zum Verklemmen der Bodenverdichtungsringe auf dem Tragrohr gegen das Tragrohr gedrückt werden.

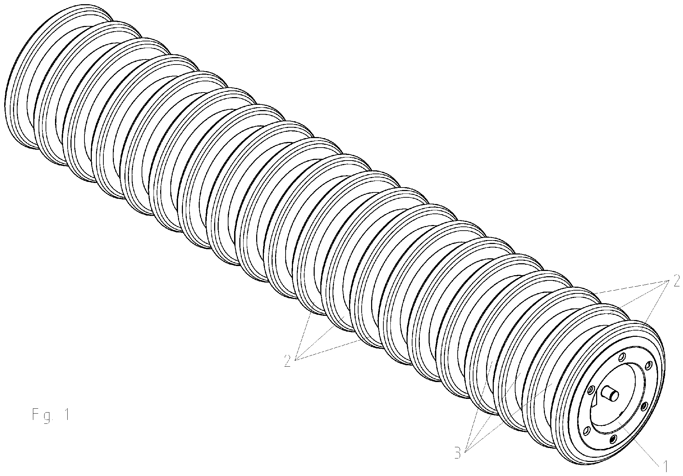

Weitere Einzelheiten der Erfindung sind der Beispielsbeschreibung und den Zeichnungen zu entnehmen. Die Zeichnungen zeigen
- Fig.1: die Bodenwalze ohne Tragrahmen in perspektivischer Darstellung,

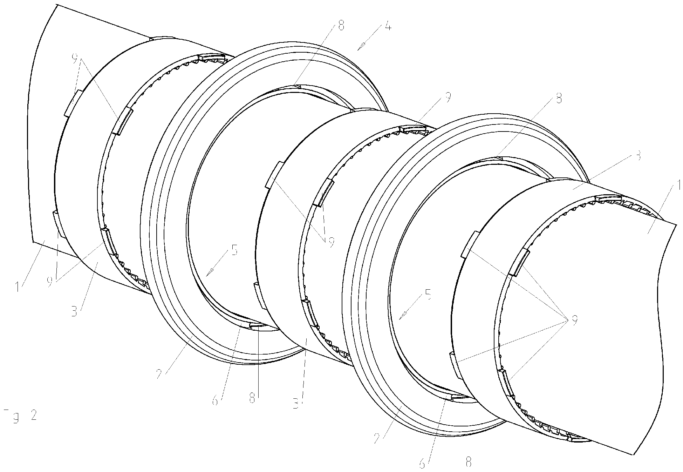

- Fig.2: die Anordnung der Bodenverfestigungsringe und Abstandselemente auf dem Tragrohr der Bodenwalze in Explosionsdarstellung, perspektivischer Darstellung im Teilansicht und vergrößertem Maßstab und
- Fig.3: die Zuordnung der Bodenverdichtungsringe und der Abstandselemente im Schnitt.

Die Bodenwalze besteht aus dem Tragrohr 1, den abwechselnd zueinander auf dem Tragrohr 1 angeordneten Bodenverfestigungsringe 2 und Abstandselementen 3. Die Bodenverfestigungsringe 2 und die Abstandselemente 3 sind in bekannter und daher in nicht dargestellter Weise gegeneinander mittels entsprechenden Spannelementen verspannt, so dass sie seitlich unverschiebbar auf dem Tragrohr 1 angeordnet sind. Die Bodenwalze ist also genannte Keilringwalze ausgebildet. Am Ende des Tragrohres 1 sind in bekannter und daher in nicht dargestellter Weise Lagerelemente zur drehbaren Lagerung des Tragrohres 1 in einem nicht dargestellten Tragrahmen angeordnet.

Die Bodenverfestigungsringe 2 sind auf dem zentralen Tragrohr 1 durch die zwischen ihnen angeordneten Abstandselemente 3 in definierten Abständen beabstandet voneinander angeordnet. Die Abstandselemente 3 weisen einen wesentlich kleineren Außendurchmesser als die Bodenverdichtungsringe 2 auf.

Die Bodenverdichtungsringe 2 und die Abstandselemente 3 weisen im unverspannten Zustand zueinander einen Innendurchmesser auf, der etwas größer ist als der Außendurchmesser des Tragrohres 1. Hierdurch lassen sich die Abstandselemente 3 und die Bodenverdichtungsringe 2 leicht auf das Tragrohr 1 aufschieben. Die Bodenverdichtungsringe 2 weisen in ihrem äußeren Umfangsbereich 4 eine keilförmige Form auf. In ihrem dem Tragrohr 1 benachbarten Bereich 5 weisen die Bodenverdichtungsringe 2 durch die beidseitig angeordnete ringförmige Nut 6 einem Querschnitt gesehen schwalbenschwanzförmige Form 7 auf. Des Weiteren weisen die Bodenverfestigungsringe 2 in dem Tragrohr 1 benachbarten Bereich 5 und im Bereich der Abstandselemente 3 mehrere beabstandet zueinander angeordnete und über die gesamte Breite B der Bodenverdichtungsringe 2 sich erstreckende Aussparungen 8 auf. Die Abstandselemente 3 weisen mit den Aussparungen 8 korrespondierende und im montierten Zustand in die Aussparungen 8 fassende Ansätze 9 auf.

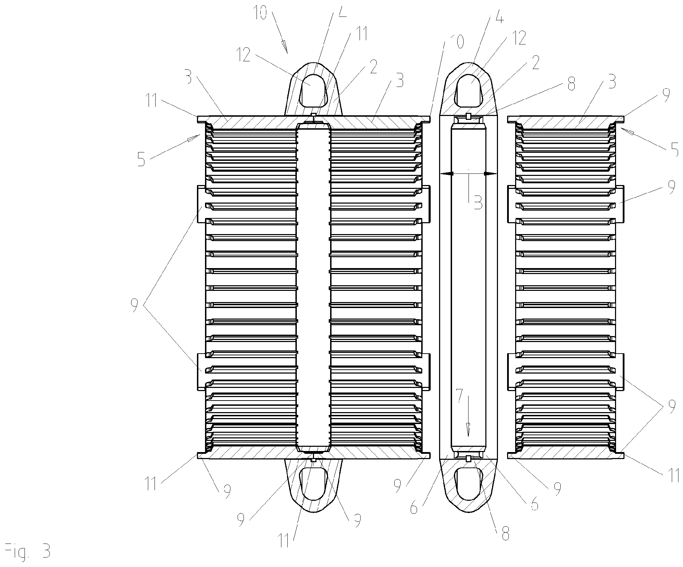

Die Ansätze 9 an den Abstandselemente 3 in weisen die halbe Breite des Abstandes der Abstandselemente 3 im montierten Zustand der Abstandselemente 3 und der Bodenverfestigungsringe 2 auf dem Tragrohr 1 der Bodenwalze auf, wie die Fig.3 im linken Bereich 10 zeigt. Hierbei liegen die Ansätze 9 an den benachbarten Abstandselementen 3 im montierten Endzustand der Abstandselemente 3 und der Bodenverfestigungsringe 2 auf dem Tragrohr 1 der Bodenwalze mit ihren Stirnseiten 11 unmittelbar aneinander, wie ebenfalls die Fig.3 im linken Bereich 10 zeigt.

Die Bodenverdichtungsringe 2 bestehen aus einem Kunststoff oder Gummi, während die Abstandselemente 3 aus einem steiferen Material als die Bodenverdichtungsringe 2 bestehen. Die Bodenverdichtungsringe 2 weisen einen umlaufenden Hohlraum 12 auf.

Die Bodenverdichtungsringe 2 sind in dem dem Tragrohr 1 benachbarten Bereich 5 derart ausgestaltet, dass das Material der Bodenverdichtungsringe 2 durch das Zusammentreffen der Abstandselemente 3 und der Bodenverdichtungsringe 2 in axialer Richtung mittels nicht dargestellter Spannelemente zum Verklemmen der Bodenverdichtungsringe 2 auf dem Tragrohr 1 gegen das Tragrohr 1 gedrückt werden.

## Patentansprüche

1. Bodenwalze mit beabstandet zueinander angeordneten umlaufenden Bodenverfestigungsringen (2), welche auf einem zentralen Tragrohr (1) voneinander beabstandet angeordnet sind, wobei zwischen den Bodenverfestigungsringen (2) umlaufende Abstandselemente (3), die im Außendurchmesser wesentlich kleiner als die Bodenverdichtungsringe (2) sind, angeordnet sind, **dadurch gekennzeichnet, dass** die Bodenverfestigungsringe (2) im Bereich (5) des zentralen Tragrohres (1) und der Abstandselemente (3) mehrere beabstandet zueinander angeordnete und über die gesamte Breite der Bodenverdichtungsringe (2) sich erstreckende Aussparungen (8) aufweisen, dass die Abstandselemente (3) mit den Aussparungen (8) korrespondierende und im montierten Zustand in die Aussparung (8) fassende Ansätze (9) aufweisen, dass die Ansätze (9) an den benachbarten Abstandselementen (3) im montierten Endzustand der Abstandselemente (3) und der Bodenverfestigungsringe (2) auf dem Tragrohr (1) der Bodenwalze mit ihren Stirnseiten (11) unmittelbar aneinander anliegen.

2. Bodenwalze nach Anspruch 1, **dadurch gekennzeichnet, dass** die Ansätze (3) an den Abstandselementen (3) die halbe Breite des Abstandes der Abstandselemente (3) im montierten Endzustand der Abstandselemente (3) und der Bodenverfestigungsringe (2) auf dem Tragrohr (1) der Bodenwalze aufweisen.

3. Bodenwalze nach zumindest einem der vorstehenden Ansprüche, **dadurch gekennzeichnet, dass** die Bodenverdichtungsringe (2) aus Kunststoff oder Gummi bestehenden, dass die Abstandselemente (3) aus einem steiferen Material als die Bodenverdichtungsringe (2) bestehen.

4. Bodenwalze nach zumindest einem der vorstehenden Ansprüche, **dadurch gekennzeichnet, dass** die Bodenverdichtungsringe (2) einen umlaufenden Hohlraum (12) aufweisen.

5. Bodenwalze nach zumindest einem der vorstehenden Ansprüche, **dadurch gekennzeichnet, dass** die Bodenverdichtungsringe (2) in dem dem Tragrohr (1) benachbarten Bereich (5) derart ausgestaltet sind, dass das Material der Bodenverdichtungsringe (2) durch das Zusammenpressen der Abstandselemente (3) und der Bodenverdichtungsringe (2) in axialer Richtung zum Verklemmen der Bodenverdichtungsringe (2) auf dem Tragrohr (1) gegen das Tragrohr (1) gedrückt werden.

## Claims

1. Soil roller with revolving soil consolidation rings (2) which are arranged spaced apart from one another and are arranged spaced apart from one another on a central supporting tube (1), wherein revolving spacer elements (3) which are substantially smaller in the outside diameter than the soil consolidation rings (2) are arranged between the soil consolidation rings (2), **characterized in that** the soil consolidation rings (2) in the region (5) of the central supporting tube (1) and the spacer elements (3) have a plurality of recesses (8) which are arranged spaced apart from one another and extend over the entire width of the soil consolidation rings (2), **in that** the spacer elements (3) have lugs (9) which correspond to the recesses (8) and, in the mounted state, catch in the recess (8), **in that**, in the mounted end state of the spacer elements (3) and the soil consolidation rings (2) on the supporting tube (1) of the soil roller, the lugs (9) on the adjacent spacer elements (3) lie with their end sides (11) directly against one another.

2. Soil roller according to Claim 1, **characterized in that** the lugs (3) on the spacer elements (3) have half the width of the spacing of the spacer elements (3) in the mounted end state of the spacer elements (3) and the soil consolidation rings (2) on the supporting tube (1) of the soil roller.

3. Soil roller according to at least either of the preceding claims, **characterized in that** the soil consolidation rings (2) composed of plastic or rubber, **in that** the spacer elements (3) are composed of a stiffer material than the soil consolidation rings (2).

4. Soil roller according to at least one of the preceding claims, **characterized in that** the soil consolidation rings (2) have a revolving cavity (12).

5. Soil roller according to at least one of the preceding claims, **characterized in that** the soil consolidation rings (2) in the region (5) adjacent to the supporting tube (1) are configured in such a manner that the material of the soil consolidation rings (2) are pressed against the supporting tube (1) by pressuring together of the spacer elements (3) and the soil consolidation rings (2) in the axial direction in order to clamp the soil consolidation rings (2) on the supporting tube (1).

## Revendications

1. Rouleau compresseur avec des anneaux périphériques de compactage du sol (2) disposés à distance l'un de l'autre, qui sont disposés à distance l'un de l'autre sur un tube porteur central (1), dans lequel des éléments d'écartement périphériques (3), qui ont un diamètre extérieur nettement plus petit que les anneaux de compactage du sol (2), sont disposés entre les anneaux de compactage du sol (2), **caractérisé en ce que** les anneaux de compactage du sol (2) présentent dans la région (5) du tube porteur central (1) et des éléments d'écartement (3) plusieurs découpes (8) disposées à distance l'une de l'autre et s'étendant sur toute la largeur des anneaux de compactage du sol (2), **en ce que** les éléments d'écartement (3) présentent des taquets (9) correspondant aux découpes (8) et s'engageant à l'état monté dans la découpe (8), **en ce que** les taquets (9) sur les éléments d'écartement voisins (3) s'appliquent directement l'un contre l'autre par leurs faces frontales (11) dans l'état monté final des éléments d'écartement (3) et des anneaux de compactage du sol (2) sur le tube porteur (1) du rouleau compresseur.

2. Rouleau compresseur selon la revendication 1, **caractérisé en ce que** les taquets (3) sur les éléments d'écartement (3) présentent la moitié de la largeur de la distance des éléments d'écartement (3) dans l'état monté final des éléments d'écartement (3) et des anneaux de compactage du sol (2) sur le tube porteur (1) du rouleau compresseur.

3. Rouleau compresseur selon au moins une des revendications précédentes, **caractérisé en ce que** les anneaux de compactage du sol (2) composent de matière plastique ou de caoutchouc, et **en ce que** les éléments d'écartement (3) se composent d'un matériau plus rigide que les anneaux de compactage du sol (2).

4. Rouleau compresseur selon au moins une des revendications précédentes, **caractérisé en ce que** les anneaux de compactage du sol (2) présentent une cavité périphérique (12).

5. Rouleau compresseur selon au moins une des revendications précédentes, **caractérisé en ce que** les anneaux de compactage du sol (2) sont configurés, dans la région (5) voisine du tube porteur (1), de telle manière que le matériau des anneaux de compactage du sol (2) sont pressé contre le tube porteur (1) par le serrage des éléments d'écartement (3) et des anneaux de compactage du sol (2) en direction axiale pour le serrage des anneaux de compactage du sol (2) sur le tube porteur (1).
